Europäisches Patentamt

European Patent Office

Office européen des brevets

(11) Veröffentlichungsnummer: **0 350 105**
**A2**

## (12) EUROPÄISCHE PATENTANMELDUNG

(21) Anmeldenummer: 89201719.5

(22) Anmeldetag: 29.06.89

(51) Int. Cl.⁴ **G11B 15/44**

(30) Priorität: 05.07.88 AT 1740/88

(43) Veröffentlichungstag der Anmeldung:
**10.01.90 Patentblatt 90/02**

(84) Benannte Vertragsstaaten:
**AT DE FR GB**

(71) Anmelder: **N.V. Philips' Gloeilampenfabrieken
Groenewoudseweg 1
NL-5621 BA Eindhoven(NL)**

(72) Erfinder: **Hütter, Heinrich
c/o INT. OCTROOIBUREAU B.V. Prof.
Holstlaan 6
NL-5656 AA Eindhoven(NL)**

(74) Vertreter: **Van Weele, Paul Johannes Frits et
al
INTERNATIONAAL OCTROOIBUREAU B.V.
Prof. Holstlaan 6
NL-5656 AA Eindhoven(NL)**

(54) Aufzeichnungs- und/oder Wiedergabegerät für einen bandförmigen Aufzeichnungsträger.

(57) Ein Aufzeichnungs- und/oder Wiedergabegerät (1) für einen zwischen zwei Wickelkernen (10, 11) verlaufenden bandförmi gen Aufzeichnungsträger (12) weist zum Antreiben der beiden Wickelkerne zwei Wickeldorne (16, 17) auf, die je mit einem Wickeldornrad (22, 23) verbunden sind. Zum umfangsseitigen Antreiben der beiden Wickeldornräder (22, 23) weist das Gerät (1) ein motorisch in entgegengesetzten Drehrichtungen antreibbares Antriebsrad (21) auf, das zum wahlweisen Antreiben der beiden Wickeldornräder (22, 23) zwischen zwei Betriebslagen verstellbar gehalten ist und das bei Änderung seiner Drehrichtung automatisch von einer zur anderen Betriebslage verstellt wird, wobei sich das Antriebsrad (21) zu seiner Verstellung umfangsseitig an einem ihm zugeordneten, an einem Abwälzkörper (51) vorgesehenen Abwälzfläche (73) abwälzt. Das Antriebsrad (21) weist einen zu demselben koaxialen zylindrischen Ansatz (57) mit kleinem Durchmesser auf, der sich ausschließlich im Bereich des Anfanges und im Bereich des Endes der Verstellung des Antriebsrades (21) von einer zur anderen Betriebslage an einer an dem Abwälzkörper (51) vorgesehenen weiteren Abwälzfläche (74) abwälzt, wobei in diesen beiden Bereichen das Antriebsrad (21) von der ihm zugeordneten Abwälzfläche (73)

abgehoben ist.

Fig.3

## Aufzeichnungs- und/oder Wiedergabegerät für einen bandförmigen Aufzeichnungsträger

Die Erfindung bezieht sich auf ein Aufzeichnungs- und/oder Wiedergabegerät für einen bandförmigen Aufzeichnungträger, der zwischen zwei nebeneinanderliegenden, rotierend antreibbaren Wickelkernen verläuft, mit zwei zum Antreiben der Wickelkerne vorgesehenen, in entgegengesetzten Drehrichtungen antreibbaren Wickeldornen und mit zwei je mit einem der beiden Wickeldorne in Antriebsverbindung stehenden, nebeneinanderliegenden Wickeldornrädern, die umfangsseitig von einem motorisch in entgegengesetzten Drehrichtungen antreibbaren Antriebsrad wahlweise antreibbar sind, das zum wahlweisen Antreiben der beiden Wickeldornräder zwischen zwei Betriebslagen verstellbar gehalten ist und das bei Änderung seiner Drehrichtung automatisch von einer zur anderen Betriebslage verstellt wird, wobei sich das Antriebsrad zu seiner Verstellung umfangsseitig an einer ihm zugeordneten, an einem Abwälzkörper vorgesehenen Abwälzfläche unter Federwirkung abwälzt.

Ein solches Gerät ist aus der FR-OS 2 038 682 bekannt. Bei diesem bekannten Gerät ist der Abwälzkörper durch eine dünne, gebogene federnde Platte gebildet und das Antriebsrad steht auch in seinen beiden Betriebslagen, in denen das Antriebsrad jeweils mit einem der beiden Wickeldornräder zum Antreiben desselben in umfangsseitiger Antriebsverbindung steht, umfangsseitig mit der Abwälzfläche an der federnden Platte in Reibverbindung, was zur Folge hat, daß aufgrund der Reibwirkung zwischen dem Antriebsrad und der Abwälzfläche in den Betriebslagen des Antriebsrades Reibungsverluste auftreten. Solche Reibungsverluste sind proportional zum Durchmesser und zur Umfangsgeschwindigkeit des reibenden Bereiches eines rotierenden Rades. Da in vorliegendem Fall das Antriebsrad in seinem äußeren Umfangsbereich mit der Abwälzfläche in Reibverbindung steht, also im Bereich des größten Durchmessers und somit der größten Umfangsgeschwindigkeit, hat dies zur Folge, daß bei dem bekannten Gerät relativ große Reibungsverluste auftreten. Solche großen Reibungsverluste sind aber nachteilig im Hinblick auf eine möglichst geringe Wärmeentwicklung zwischen den Reibpartnern, einen möglichst geringen Verschleiß der Reibpartner und eine möglichst geringe Leistungsaufnahme des Motors beim Antreiben eines der beiden Wickeldornräder mit dem Antriebsrad.

Die Erfindung hat sich zur Aufgabe gestellt, die vorstehend angeführten Schwierigkeiten zu vermeiden und ein Gerät der eingangs angeführten Gattung zu schaffen, bei dem in den beiden Betriebslagen des Antriebsrades nur möglichst kleine Reibungsverluste auftreten. Hiefür ist die Erfindung dadurch gekennzeichnet, daß das Antriebsrad einen von demselben abstehenden, zu demselben koaxialen zylindrischen Ansatz mit einem gegenüber dem Durchmesser des Antriebsrades kleineren Durchmesser aufweist und daß für den Ansatz an dem Abwälzkörper eine weitere Abwälzfläche vorgesehen ist, an der sich der Ansatz ausschließlich im Bereich des Anfanges und im Bereich des Endes der Verstellung des Antriebsrades von einer zur anderen Betriebslage abwälzt, wobei in diesen beiden Bereichen das Antriebsrad von der ihm zugeordneten Abwälzfläche abgehoben ist und wobei zwischen diesen beiden Bereichen der Ansatz von der weiteren Abwälzfläche abgehoben ist und sich das Antriebsrad an der ihm zugeordneten Abwälzfläche abwälzt. Auf diese Weise ist erreicht, daß in den beiden Betriebslagen des Antriebsrades nicht das Antriebsrad selbst, sondern nur der mit dem Antriebsrad verbundene Ansatz mit der weiteren Abwälzfläche in Reibverbindung steht. Da die Umfangsgeschwindigkeit und der Durchmesser des Ansatzes, welche beiden Größen die Reibungsverluste bestimmen, im Vergleich zur Umfangsgeschwindigkeit und zum Durchmesser des Antriebsrades klein sind, sind auf diese Weise besonders kleine Reibungsverluste in den beiden Betriebslagen des Antriebsrades erreicht. Hiedurch ist die Wärmeentwicklung zwischen dem Ansatz und der weiteren Abwälzfläche klein gehalten, so daß keine Maßnahmen zur Wärmeableitung getroffen werden müssen und die weitere Abwälzfläche samt dem Abwälzkörper und der Ansatz samt dem Antriebsrad vorteilhafterweise aus Kunststoff hergestellt werden können, was einfach und billig ist. Aufgrund der kleinen Reibungsverluste ist auch ein geringer Verschleiß der Reibpartner und weiters eine relativ geringe Leistungsaufnahme des Motors beim Antreiben eines der beiden Wickel dornräder mit dem Antriebsrad erreicht. Hinsichtlich der Verstellung des Antriebsrades ist hiebei weiters vorteilhaft, daß sich durch das Abwälzen des Ansatzes mit kleinem Durchmesser an der weiteren Abwälzfläche eine relativ kleine Verstellgeschwindigkeit für das Antriebsrad im Bereich des Anfanges und im Bereich des Endes seiner Verstellung aus beziehungsweise in dessen Betriebslagen ergibt, wogegen zwischen diesen beiden Bereichen durch das Abwälzen des Antriebsrades mit großem Durchmesser an der ihm zugeordneten Abwälzfläche eine relativ hohe Verstellgeschwindigkeit für das Antriebsrad in dem übrigen größeren Bereich seiner Verstellung erreicht wird. Dadurch ist einerseits für ein sanftes Abheben des Antriebsrades von den Wickeldornrädern und für ein sanftes Anlegen des Antriebsrades an die Wickeldornräder und andererseits für eine rasche Verstellung des Antriebsrades zwischen seinen beiden Betriebslagen gesorgt. Durch das sanfte Anlegen des Antriebsrades an die Wickeldornräder ist einem Prellen beim Anlegen vorgebeugt.

An dieser Stelle sei erwähnt, daß aus der DE-OS 24 40 983 ein Gerät bekannt ist, bei dem zum Antreiben von zwei Wickeldornrädern eine zwischen den beiden Wickeldornrädern verschwenkbar gehaltene Antriebswelle vorgesehen ist, die in Abhängigkeit von ihrer Drehrichtung automatisch zwischen zwei Betriebslägen verschwenkt wird, in denen sie jeweils mit einem der beiden Wickeldornräder zum Antreiben desselben in umfangsseitiger Antriebsverbindung steht, und die sich bei ihrer Verstellung an einer an einem blockförmigen, federbelasteten Abwälzkörper vorgesehenen Abwälzfläche abwälzt, mit der die Antriebswelle dann auch in ihren beiden Betriebslagen in Reibverbindung steht. Bei diesem bekannten Gerät dient die Antriebswelle, die nur einen kleinen Durchmesser aufweist, unmittelbar zum wahlweisen Antreiben der beiden Wickeldornräder, wobei aufgrund der Durchmesserverhältnisse nur ein sehr kleines Übersetzungsverhältnis vorliegt. Wegen dieses kleinen Übersetzungsverhältnisses muß die Antriebswelle, um eine ausreichend hohe Drehzahl der Wikkeldornräder zu erreichen, mit einer hohen Drehzahl angetrieben werden, so daß sie aber eine hohe Umfangsgeschwindigkeit aufweist. Dies hat, weil die Antriebswelle auch in ihren beiden Betriebslagen mit der Ab wälzfläche in Reibverbindung steht, wieder hohe Reibungsverluste in den Betriebslagen der Antriebswelle zur Folge hat, so daß bei diesem bekannten Gerät nicht der erfindungsgemäße Vorteil, nämlich die Erzielung kleiner Reibungsverluste, erreichbar ist. Weiters dauert bei diesem bekannten Gerät die Verstellung der Antriebswelle von einer in die andere Betriebslage relativ lange, weil die durch das Abwälzen der Antriebswelle an der Abwälzfläche erzielte Verstellgeschwindigkeit der Antriebswelle wegen ihres kleinen Durchmessers niedrig ist und in dem gesamten Bereich der Verstellung der Antriebswelle sich nur die Antriebswelle selbst an der Abwälzfläche abwälzt. Demgegenüber wird beim erfindungsgemäßen Gerät, wie bereits vorstehend erläutert, eine rasche Verstellung des Antriebsrades von einer in die andere Betriebslage erreicht, weil während des Abwälzens des Antriebsrades mit großem Durchmesser an der ihm zugeordneten Abwälzfläche eine relativ hohe Verstellgeschwindigkeit für das Antriebsrad erzielt wird.

Hinsichtlich der Erzielung kleiner Reibungsverluste ist es an sich zweckmäßig, den Durchmesser des Ansatzes möglichst klein zu halten, wobei aber dann die durch das Abwälzen des Ansatzes bewirkte Verstellgeschwindigkeit des Antriebsrades im Bereich des Anfanges und im Bereich des Endes seiner Verstellung umso geringer ist, je kleiner der Durchmesser des Ansatzes ist. Diese Verstellgeschwindigkeit soll zwar einerseits gering sein, um ein sanftes, prellfreies Anlegen des Antriebsrades an die Wickeldornräder zu erreichen, aber andererseits doch ausreichend hoch sein, um eine insgesamt kurze Verstelldauer des Antriebsrades von einer in die andere Betriebslage zu erreichen. Als vorteilhaft hat sich in diesem Zusammenhang erwiesen, wenn das Verhältnis des Durchmessers des Ansatzes zu dem Durchmesser des Antriebsrades in einem Bereich zwischen 1:5 und 1:10 liegt. Auf diese Weise wird ein guter Kompromiß hinsichtlich der Erzielung von möglichst kleinen Reibungsverlusten in den beiden Betriebslagen des Antriebsrades einerseits und einer ausreichend hohen durch das Abwälzen des Ansatzes bewirkten Verstellgeschwindigkeit des Antriebsrades im Bereich des Anfanges und im Bereich des En des seiner Verstellung andererseits erreicht.

Das Antriebsrad kann beispielsweise an einem separaten verschwenkbaren Hebel drehbar gelagert sein. Als vorteilhaft hat sich aber erwiesen, wenn das Antriebsrad an dem Abwälzkörper verstellbar gehalten ist. Auf diese Weise ist erreicht, daß der Abwälzkörper zusätzlich zum verstellbaren Halten des Antriebsrades ausgenützt ist, so daß sich ein separater Bauteil zum Halten des Antriebsrades erübrigt, was hinsichtlich einer einfachen und billigen Ausbildung mit möglichst wenigen Bauteilen vorteilhaft ist.

In diesem Zusammenhang hat sich als besonders vorteilhaft erwiesen, wenn der Abwälzkörper einen Plattenförmigen Trägerteil aufweist, an dessen einer Plattenfläche das Antriebsrad mit einer Seitenfläche anliegt und in dem ein ihn durchsetzender bogenförmiger Schlitz vorgesehen ist, durch den ein von dem Antriebsrad abstehender, zu demselben koaxialer Wellenstummel hindurchragt, mit dem das Antriebsrad an dem Trägerteil verstellbar gehalten ist. Auf diese Weise ist erreicht, daß das Antriebsrad mit einfachen Mitteln sicher an dem Abwälzkörper verstellbar gehalten ist.

Dabei hat sich als vorteilhaft erwiesen, wenn der Wellenstummel an seinem vom Antriebsrad abgewandten freien Ende einen Endabschnitt aufweist, dessen Durchmesser größer als die Breite des bogenförmigen Schlitzes ist, und der bogenförmige Schlitz in seinem Mittelbereich eine Verbreiterung aufweist, durch die und den an sie angrenzenden Schlitzbereich der Endabschnitt des Wellenstummels beim Montieren des Antriebsrades an dem Abwälzkörper hindurchführbar ist. Auf diese Weise ist eine besonders einfache und zeitsparende Montage des Antriebsrades an dem Abwälzkörper erreicht.

Weiters hat sich dabei als vorteilhaft erwiesen, wenn der unmittelbar an das Antriebsrad angrenzende Abschnitt des Wellenstummels den Ansatz des Antriebsrades bildet und die weitere Abwälzfläche für den Ansatz durch eine Begrenzungswand des bogenförmigen Schlitzes in dem Trägerteil gebildet ist. Hiedurch ist eine besonders einfache Ausbildung erreicht, die sich weiters durch einen besonders flachen und raumsparenden Aufbau auszeichnet.

Der Abwälzkörper kann im Gerät stationär angeordnet sein und das am Abwälzkörper verstellbar gehaltene Antriebsrad kann mit einem im Gerät verstellbar gehaltenen, federnd gegen die Umfangsseite des Antriebsrades drückenden Treibrad gegen die Abwälzflächen gedrückt werden. Als vorteilhaft hat sich aber erwiesen, wenn der Abwälzkörper im Gerät verstellbar gehalten ist und an dem Abwälzkörper eine Feder angreift, die über die an dem Abwälzkörper vorgesehenen Abwälzflächen das an dem Abwälzkörper verstellbar gehaltene Antriebsrad umfangsseitig gegen ein im Gerät stationär angeordnetes Treibrad drückt. Auf diese Weise ist eine einfache und stabile Ausbildung erreicht, bei der aufgrund der stationären Anordnung des Treibrades die Kraftübertragung zu den Wickeldornrädern über nur ein einziges verstellbares Rad, nämlich das Antriebsrad, erfolgt, was hinsichtlich eines gleichmäßigen und sicheren Antriebes der Wickeldornräder vorteilhaft ist.

Im Hinblick auf die Ausbildung der an dem verstellbar gehaltenen Abwälzkörper angreifenden Feder hat sich als besonders vorteilhaft erwiesen, wenn die Feder als Stabfeder ausgebildet ist, die mit ihrem Mittelabschnitt an dem verstellbar gehaltenen Abwälzkörper angreift und mit ihren beiden Endabschnitten je an einem stationären Stift abgestützt ist. Hiedurch ist eine besonders einfache und billige Ausbildung erreicht, die auch hinsichtlich einer leichten Montage vorteilhaft ist.

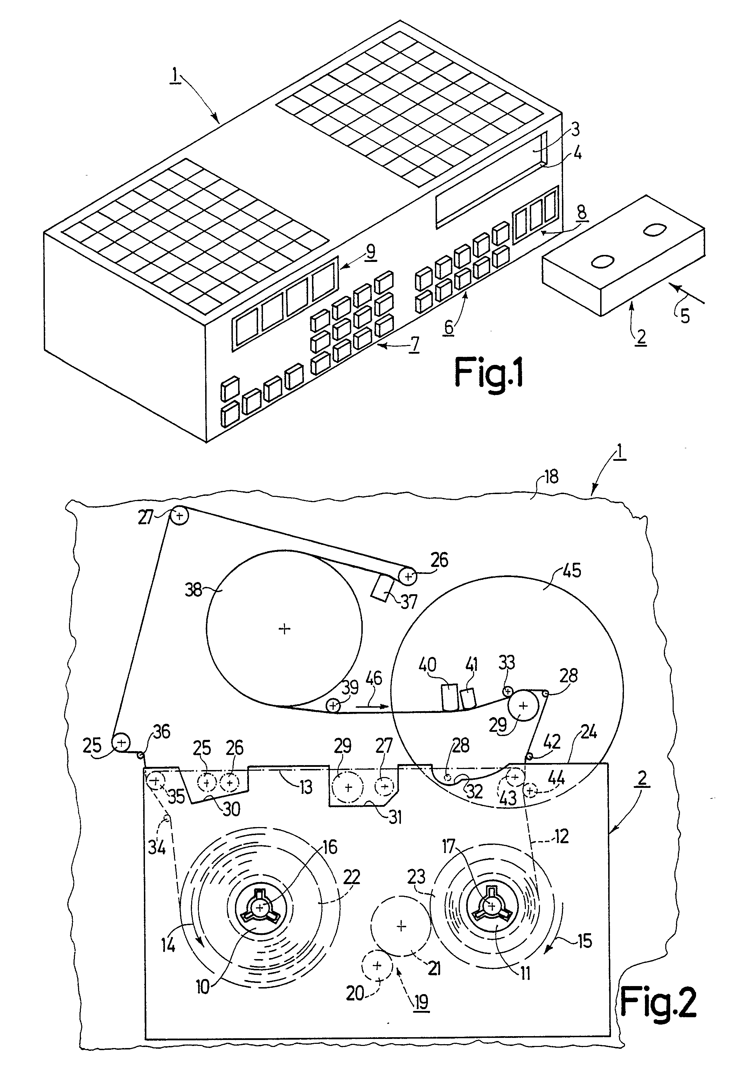

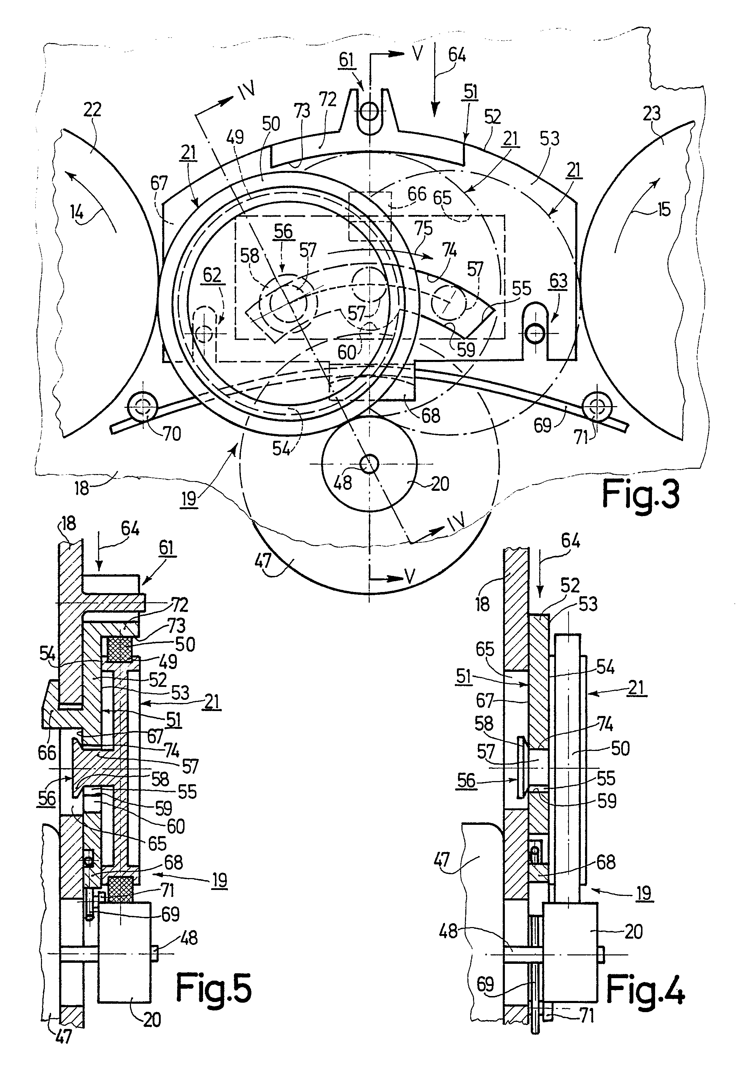

Die Erfindung wird im folgenden anhand eines in den Zeichnungen dargestellten Ausführungsbeispieles näher beschrieben, auf das dieselbe jedoch nicht beschränkt sein soll. Die Fig.1 zeigt in einem verkleinerten Maßstab schematisch in einer Schrägansicht ein Aufzeichnungs- und Wiedergabegerät für Fernsehsignale und Tonsignale, in das eine Kassette einsetzbar ist, die einen bandförmigen, zwischen zwei nebeneinanderliegenden Wickelkernen verlaufenden, magnetisierbaren Aufzeichnungsträger enthält, auf dem Fernsehsignale in schrägen Spuren mit rotierend antreibbaren Magnetköpfen aufzeichenbar beziehungsweise von demselben wiedergebbar sind. Die Fig.2 zeigt schematisch einen Teil des Gerätes gemäß Fig.1 in einem größeren Maßstab als in Fig.1, wobei eine Kassette in das Gerät eingesetzt ist und der Aufzeichnungsträger aus der Kassette herausgezogen und um geräteseitige Führungs- und Abtastelemente herumgeführt ist. Die Fig.3 zeigt etwa in zweifacher Vergrößerung gegenüber der natürlichen Größe in Draufsicht eine Antriebseinrichtung des Gerätes gemäß Fig.1 für zwei Wickeldorne, die zum Antreiben der beiden in der Kassette nebeneinanderliegenden Wickelkerne dienen und die je mit einem Wickeldornrad koaxial verbunden sind, welche Antriebseinrichtung ein zwischen zwei Betriebslagen verstellbares Antriebsrad zum wahlweisen Antreiben der beiden Wickeldornräder aufweist. Die Fig.4 zeigt in einem Schnitt gemäß der Linie IV-IV in Fig.3 die Antriebseinrichtung gemäß Fig.3, wobei das Antriebsrad eine seiner beiden Betriebslagen einnimmt. Die Fig.5 zeigt in einem Schnitt gemäß der Linie V-V in Fig.3 die Antriebseinrichtung gemäß Fig.3, wobei das Antriebsrad eine zwischen den beiden Betriebslagen liegende Zwischenlage einnimmt.

Die Fig.1 zeigt ein Aufzeichnungs- und Wiedergabegerät 1, das zum Aufzeichnen und Wiedergeben von Fernsehsignalen und Tonsignalen auf einem bandförmigen, magnetisierbaren Aufzeichnungsträger, im folgenden kurz Magnetband genannt, ausgebildet ist. Das Magnetband ist in einer in Fig.1 schematisch dargestellten Kassette 2 untergebracht, die zwei nebeneinanderliegende Wickelkerne enthält, zwischen denen das Magnetband entlang eines mittels kassettenseitiger Bandführungen festgelegten Verlaufes verläuft. Die Kassette 2 ist durch eine mit einem nach innen verstellbaren Deckel 3· verschließbare Öffnung 4 hindurch in Richtung des Pfeiles 5 in das Gerät 1 händisch einsetzbar. Beim Einsetzen der Kassette 2 in das Gerät 1 wird dieselbe in eine verstellbare Kassettenaufnahme eingeschoben, mit der die Kassette nach ihrem vollständigen Einsetzen in das Gerät im wesentlichen senkrecht zu den Kassettenhauptwänden in eine in Fig.2 schematisch dargestellte Betriebslage im Gerät abgesenkt wird. Zum Einschalten von Betriebsarten des Gerätes, wie "Aufnahme", "Wiedergabe im Normalen Vorlauf", "Wiedergabe bei Bandstillstand", "Wiedergabe im Normalen Rücklauf", "Schneller Vorlauf", "Schneller Rücklauf" und dergleichen, weist das Gerät 1 einen ersten Satz 6 von Bedienungstasten auf. Zum Programmieren des Gerätes und zum Eingeben von weiteren Daten, beispielsweise zum Einstellen einer Tageszeituhr, weist das Gerät 1 einen zweiten Satz 7 von Bedienungstasten auf. Weiters weist das Gerät 1 zwei Anzeigeeinheiten 8 und 9 auf, deren Anzeigestellen beispielsweise je aus sieben Segmenten aufgebaut sind und die beispielsweise zum Anzeigen von Zählwerksständen eines Zählwerkes zum Messen des Bandverbrauches und zum Anzeigen von Uhrzeiten dienen.

Wie bereits erwähnt, wird eine in das Gerät 1 eingesetzte Kassette 2 in eine Betriebslage abgesenkt. Wie in Fig.2 schematisch gezeigt ist, sind in der Kassette 2 zwei nebeneinanderliegende, rotierend antreibbare Wickelkerne 10 und 11 untergebracht, zwischen denen das Magnetband 12 innerhalb der Kassette 2 entlang dem teilweise durch eine strichpunktierte Linie 13 angegebenen Verlauf verläuft und auf die das Magnetband korrespondierend zu seiner jeweiligen Fortbewegungsrichtung wahlweise und in entgegengesetztem Wickelsinn, wie dies mit den Pfeilen 14 und 15 angegeben ist, aufwickelbar ist. Beim Absenken einer Kassette 2 in ihre Betriebslage treten mit den in der Kassette untergebrachten Wickelkernen 10 und 11 zwei Wikkeldorne 16 und 17 in Antriebsverbindung, die in einer Montageplatte 18 des Gerätes 1 drehbar gelagert sind. Mit den Wickeldornen 16 und 17 sind die beiden koaxial auf dieselben aufgesetzten Wikkelkerne 10 und 11 rotierend antreibbar. Die Wikkeldorne können selbstverständlich auch anders als dargestellt ausgebildet sein und beispielsweise je einen zentrisch angeordneten Positionierdorn zum Positionieren eines Wickelkernes und einen zu diesem exzentrisch angeordneten Antriebsdorn zum Antreiben eines Wickelkernes aufweisen. Zum Antreiben der beiden Wickeldorne 16 und 17 in den entgegengesetzten Drehrichtungen 14 und 15 ist eine in Fig.2 nur schematisch angedeutete Antriebseinrichtung 19 vorgesehen, die ein im Gerät 1 stationär angeordnetes, motorisch antreibbares Treibrad 20 und ein von diesem antreibbares, Parallel zur Montageplatte 18 verstellbar gehaltenes Antriebsrad 21 aufweist, das wahlweise mit einem von zwei zu den Wickeldornen 16 und 17 koaxial angeordneten und mit ihnen drehfest verbundenen, auf demselben axialen Niveau liegenden Wickeldornrädern 22 und 23 umfangsseitig in Antriebsverbindung bringbar ist, wie nachfolgend noch detailliert beschrieben ist.

Beim Absenken der Kassette 2 in ihre Betriebslage wird ein an ihrer Stirnseite 24 vorgesehener, nicht dargestellter Kassettenverschlußdeckel geöffnet, wodurch eine Kassettenöffnung in der Stirnseite 24 freigegeben wird, durch die hindurch das in der Kassette untergebrachte Magnetband 12 aus derselben herausführbar ist, und treten vier Bandführungen 25, 26, 27 und 28 und eine Andruckrolle 29, wobei sich die Bandführungen und die Andruckrolle je in einer in Fig.2 mit strichpunktierten Linien dargestellten Ruhelage befinden, in drei Ausnehmungen 30, 31 und 32 der Kassette 2 ein, wobei sie das Magnetband 12 im Bereich des mit der strichpunktierten Linie 13 dargestellten Verlaufes hintergreifen. Nach erfolgtem Absenken der Kassette in ihre Betriebslage sind die Bandführungen 25, 26, 27 und 28 je in ihre in Fig.2 mit vollen Linien dargestellte Betriebslage verstellbar, wobei auch die Andruckrolle 29 in eine in Fig.2 nicht dargestellte Zwischenlage in unmittelbarer Nähe einer Bandantriebswelle 33 verstellbar ist. Dabei wird das Magnetband 12 durch die Kassettenöffnung in der Stirnseite 24 der Kassette 2 hindurch aus derselben herausgeführt. Aus der erwähnten Zwischenlage ist die Andruckrolle 29 in ihre in Fig.2 mit einer vollen Linie dargestellte Betriebslage verstellbar, in der sie das Magnetband 12 an die Bandantriebswelle 33 andrückt. Da die Einrichtungen zum Öffnen des Kassettenverschlußdeckels, zum Verstellen der Bandführungen und der Andruckrolle und zum Andrücken der Andruckrolle an die Bandantriebswelle für die Erfindung nicht wesentlich sind, sind diese auch der Einfachheit halber nicht dargestellt. Derartige Einrichtungen sind aus bestehenden Geräten dieser Art bekannt.

Nach einer Verstellung der Bandführungen 25, 26, 27 und 28 und der Andruckrolle 29 in ihre Betriebslagen nimmt das Magnetband 12 den in Fig.2 mit einer vollen Linie dargestellten Verlauf ein. Dabei erstreckt sich das Magnetband vom Wickelkern 10 über zwei in der Kassette 2 enthaltene Bandführungen 34 und 35, einen Bandspannungsfühlstift 36, der Bestandteil einer nicht dargestellten Bandspannungsregeleinrichtung ist, die verstellbaren Bandführungen 25, 27 und 26, einen ortsfesten Magnetkopf 37 zum Löschen aller auf dem Magnetband 12 aufgezeichneten Signale, eine trommelförmige Abtasteinheit 38, die rotierend antreibbare Magnetköpfe zum Aufzeichnen und Wiedergeben von Fernsehsignalen in und aus schräg zur Längsrichtung des Magnetbandes verlaufenden, nebeneinanderliegenden Videospuren enthält, eine ortsfeste Bandführung 39, einen ortsfesten Magnetkopf 40 zum Löschen von Tonsignalen, die in einer in Längsrichtung des Magnetbandes 12 verlaufenden Tonspur aufgezeichnet sind, einen weiteren ortsfesten Magnetkopf 41 zum Aufzeichnen und Wiedergeben von Tonsignalen in der Tonspur und zum Aufzeichnen und Wiedergeben von Synchronisationssignalen in und aus einer in Längsrichtung des Magnetbandes und parallel neben der Tonspur verlaufenden Synchronspur, die Bandantriebswelle 33, an die das Magnetband 12 mit der Andruckrolle 29 angedrückt ist, die verstellbare Bandführung 28, eine ortsfeste Bandführung 42 und zwei weitere in der Kassette 2 enthaltene Bandführungen 43 und 44 zum Wickelkern 11.

Die Bandantriebswelle 33, die in üblicher Weise mit einer Schwungscheibe 45 verbunden ist, ist wahlweise in einer von beiden Drehrichtungen mit konstanter Drehzahl antreibbar. Auf diese Weise ist bei an die Bandantriebswelle 33 angedrückter Andruckrolle 29 das Magnetband 12 wahlweise in einer von zwei zueinander entgegengesetzten Fortbewegungsrichtungen mit konstanter Fortbewegungsgeschwindigkeit antreibbar. Beim Antreiben der Bandantriebswelle 33 mit einer vorgegebenen Drehzahl gemäß Fig.2 entgegen dem Uhrzeigersinn wird das Magnetband 12 in Richtung des Pfeiles 46 angetrieben, was dem sogenannten "Normalen Vorlauf" entspricht, bei dem das Aufzeichnen von Signalen in der Betriebsart "Aufnahme" und auch das normale Wiedergeben derselben in der Betriebsart "Wiedergabe im Normalen Vorlauf" erfolgt und bei dem zum Aufwickeln des Magnetbandes 12 auf den Wickelkern 11 in Richtung des Pfeiles 15 das mit dem Wickeldorn 17 drehfest verbundene Wickeldornrad 23 von dem Antriebsrad 21 der Antriebseinrichtung 19 angetrieben wird. Wenn die Bandantriebswelle 33 mit derselben vorgegebenen Drehzahl, aber gemäß Fig.2 im Uhrzeigersinn angetrieben wird, dann wird das Magnetband 12 entgegen der Richtung des Pfeiles 46 angetrieben, was dem sogenannten "Normalen Rücklauf" entspricht. der auch als "Reverse-Lauf" bezeichnet wird, bei dem in der Betriebsart "Wiedergabe im Normalen Rücklauf" eine Wiedergabe von aufgezeichneten Fern sehsignalen zur Erzeugung von rückläufigen Bewegungsabläufen erfolgt und bei dem zum Aufwickeln des Magnetbandes 12 auf den Wickelkern 10 in Richtung des Pfeiles 14 das mit dem Wickeldorn 16 drehfest verbundene Wickeldornrad 22 von dem Antriebsrad 21 der Antriebseinrichtung 19 angetrieben wird.

Wie bereits erwähnt, sind im Gerät 1 auch die Betriebsarten "Schneller Vorlauf" und "Schneller Rücklauf" einschaltbar, in denen das Magnetband 12 mit erhöhter Fortbewegungsgeschwindigkeit zwischen den Wickelkernen 10 und 11 umgespult wird. Vor einem solchen Umspulvorgang wird bei vorliegendem Gerät durch Rückverstellung der verstellbaren Bandführungen 25, 26, 27 und 28 und der Andruckrolle 29 von ihren Betriebslagen in ihre in Fig.2 mit strichpunktierten Linien dargestellten Ruhelagen und durch gleichzeitiges Antreiben des Wickeldornes 16 in Richtung des Pfeiles 14 mit Hilfe des Antriebsrades 21 der Antriebseinrichtung 19 das Magnetband 12 in die Kassette 2 zurückgeführt, wobei das Magnetband 12 dann wieder entlang des mit der strichpunktierten Linie 13 angegebenen Verlaufes verläuft. Beim Umspulen des Magnetbandes 12 in den Betriebsarten "Schneller Vorlauf" und Schneller Rücklauf" erfolgt der Antrieb des Magnetbandes 12 ausschließlich durch Antreiben eines der beiden Wickelkerne 10 und 11, wobei auch in diesen beiden Betriebsarten die beiden Wickeldorne 16 und 17 von der Antriebseinrichtung 19 antreibbar sind, deren Antriebsrad 21 in der Betriebsart "Schneller Vorlauf" mit dem Wickeldornrad 23 und in der Betriebsart "Schneller Rücklauf" mit dem Wickeldornrad 22 in umfangsseitige Antriebsverbindung gebracht wird.

Anhand der Figuren 3, 4 und 5 ist im folgenden die Antriebseinrichtung 19 des Gerätes 1 detailliert beschrieben, mit der die beiden Wickeldornräder 22 und 23, die in Fig.3 nur teilweise dargestellt sind, umfangsseitig antreibbar sind. Die Antriebseinrichtung 19 weist einen an der Montageplatte 18 befestigten, in entgegengesetzten Drehrichtungen antreibbaren Motor 47 auf. Es sei erwähnt, daß der Motor 47 an eine, weil für die Erfindung nicht wesentliche, nicht dargestellte regelbare Speiseschaltung angeschlossen ist, die den Motor je nach im Gerät eingeschalteter Betriebsart mit unterschiedlichen Speisespannungen und -strömen versorgt, so daß der Motor je nach Betriebsart auf geregelte Weise in unterschiedlichen Drehrichtungen und mit unterschiedlichen Drehzahlen angetrieben wird. Beim Umspulen des Magnetbandes wird der Motor 47 mit wesentlich höherer Drehzahl angetrieben als beim Antreiben des Magnetbandes mit normaler Bandgeschwindigkeit.

Der Motor 47 trägt an seiner Motorwelle 48 das Treibrad 20, das auf diese Weise im Gerät stationär angeordnet ist. Das Treibrad 20 ist als Reibrad ausgebildet. Mit dem Treibrad 20 ist umfangsseitig das ebenfalls als Reibrad ausgebildete, aus Kunststoff bestehende Antriebsrad 21 in Antriebsverbindung gehalten, worauf im folgenden noch näher eingegangen ist, so daß auf diese Weise das Antriebsrad 21 über das Treibrad 20 je nach Drehrichtung des Motors 47 motorisch in entgegengesetzten Drehrichtungen antreibbar ist. Das Antriebsrad 21 weist an seinem Umfangsbereich eine Nut 49 auf, in die ein Gummiring 50 eingesetzt ist, mit dem eine für eine einwandfreie Funktion erforderliche ausreichend hohe Friktion gewährleistet ist. Das Antriebsrad 21 ist zum wahlweisen Antreiben der beiden Wickeldornräder 22 und 23 zwischen zwei Betriebslagen verstellbar gehalten, in denen das Antriebsrad jeweils mit einem der beiden Wickeldornräder 22 und 23 umfangsseitig in Antriebsverbindung steht, wobei der Gummiring 50 an der Umfangsfläche des betreffenden Wickeldornrades anliegt. In Fig.3 ist das Antriebsrad 21 in jener Betriebslage, in der es an dem Wickeldornrad 22 umfangsseitig anliegt, mit vollen Linien dargestellt, und in jener Betriebslage, in der es an dem anderen Wickeldornrad 23 anliegt, nur mit einer strichpunktierten Linie angedeutet.

Das Antriebsrad 21 ist an einem aus Kunststoff bestehenden Abwälzkörper 51 verstellbar gehalten. Dabei weist der Abwälzkörper 51 einen plattenförmigen Trägerteil 52 auf, an dessen von der Montageplatte 18 abgewandter einer Plattenfläche 53 das Antriebsrad 21 mit einer ringförmigen Seitenfläche 54 desselben anliegt, so daß bei einer Verstellung des Antriebsrades 21 die Seitenfläche 54 auf der Plattenfläche 53 gleitet. Im Bereich der Plattenfläche 53 können zur Verringerung des Reibungswiderstandes auch Nuten in dem plattenförmigen Trägerteil vorgesehen sein. In dem Plattenförmigen Trägerteil 52 ist ein ihn durchsetzender kreisbogenförmiger Schlitz 55 vorgesehen, dessen Kreisbogenmittelpunkt gegenüber der Achse des Treibrades 20 etwas in Richtung zum Schlitz hin versetzt liegt. Durch den Schlitz 55 ragt ein von dem Antriebsrad 21 abstehender, zu demselben koaxialer Wellenstummel 56 hindurch, mit dem das Antriebsrad 21 an dem plattenförmigen Trägerteil 52 und damit an dem Abwälzkörper 51 verstellbar gehalten ist. Hiefür weist der Wellenstummel 56 einen an das Antriebsrad 21 angrenzenden ersten Abschnitt 57, dessen Durchmesser kleiner als die Breite des Schlitzes 55 ist und der den plattenförmigen Trägerteil 52 durchsetzt, und einen an den ersten Abschnitt 57 anschließenden Endabschnitt 58 auf, dessen Durchmesser größer als die Breite des Schlitzes 55 ist und der den plattenförmigen Trägerteil 52 hintergreift und auf diese Weise das Antriebsrad 21 an dem Abwälzkörper 51 verstellbar hält. Der erste Abschnitt 57 des Wellenstummels 56 bildet einen von dem Antriebsrad 21 abstehenden, zu demselben koaxialen zylindrischen Ansatz mit einem gegenüber dem Durchmesser des Antriebsrades 21 kleineren Durchmesser, der noch eine weitere Funktion erfüllt, auf die im folgenden noch näher eingegangen ist. Der Durchmesser des ersten Abschnittes 57 und der Durchmesser des Antriebsrades 21 im Bereich der Umfangsfläche des Gummiringes 50 weisen im vorliegenden Fall ein Verhältnis von etwa 1:7 auf. Der Schlitz 55 weist in seinem Mittelbereich im Verlauf seiner dem Treibrad 20 zugewandten Begrenzungswand 59 eine Verbreiterung 60 auf, deren Größe so gewählt ist, daß der Endabschnitt 58 des Wellenstummels 56 durch die Verbreiterung 60 und den an sie angrenzenden Schlitzbereich beim Montieren des Antriebsrades 21 an dem Abwälzkörper 51 einfach hindurchführbar ist, so daß auf diese Weise das Antriebsrad 21 besonders einfach und zeitsparend an dem Abwälzkörper 51 montiert werden kann.

Der Abwälzkörper 51 ist an der Montageplatte 18 mit Hilfe von drei Stift-Schlitz-Verbindungen 61, 62 und 63 in Richtung des Pfeiles 64 verstellbar geführt und mit Hilfe von einem von seinem Trägerteil 52 abstehenden, durch einen Durchbruch 65 in der Montageplatte 18 hindurchgeführten, die Montageplatte 18 hintergreifenden Haken 66 an der Montageplatte verstellbar gehalten, wobei bei einer Verstellung des Abwälzkörpers 51 der Trägerteil 52 mit seiner der Montageplatte 18 zugewandten Plattenfläche 67 an der Montageplatte 18 gleitet. An einem vom Trägerteil 52 in Richtung des Pfeiles 64 abstehenden winkel 68 des Abwälzkörpers 51 greift eine Stabfeder 69 mit ihrem Mittelabschnitt an, die mit ihren beiden Endabschnitten je an einem von zwei von der Montageplatte 18 abstehenden Stiften 70 und 71 abgestützt ist und die den Abwälzkörper 51 in Richtung des Pfeiles 64 belastet.

Von dem Plattenförmigen Trägerteil 52 des Abwälzkörpers 51 steht eine Leiste 72 ab, die eine dem Antriebsrad 21 zugewandte kreisbogenförmige Begrenzungswand 73 aufweist, deren Kreisbogenmittelpunkt sich mit der Achse des Treibrades 20 praktisch deckt. Die Begrenzungswand 73 bildet eine dem An triebsrad 21 zugeordnete Abwälzfläche, an der sich das Antriebsrad 21 im Zuge der Verstellung desselben zwischen seinen beiden Betriebslagen umfangsseitig, also mit seinem Gummiring 50, unter Federwirkung abwälzt, wobei die Federwirkung durch die Stabfeder 69 geschaffen ist. Der Abwälzkörper 51 weist zusätzlich auch noch eine weitere Abwälzfläche 74 auf, die in vorliegendem Fall durch die vom Treibrad 20 abgewandte kreisbogenförmige Begrenzungswand des Schlitzes 55 gebildet ist. Diese weitere Abwälzfläche 74 ist zum Zusammenwirken mit dem ersten Abschnitt 57 des Wellenstummels 56 vorgesehen. Dabei ist die Anordnung und die Ausbildung der beiden Abwälzflächen 73 und 74 so getroffen, daß der erste Abschnitt 57 des Wellenstummels 56 in den beiden Betriebslagen des Antriebsrades 21 an der weiteren Abwälzfläche 74 anliegt, wobei der Gummiring 50 des Antriebsrades 21 von der ihm zugeordneten Abwälzfläche 73 abgehoben ist und sich daher außer Verbindung von der ihm zugeordneten Abwälzfläche 73 befindet, und daß sich der erste Abschnitt 57 des Wellenstummels 56 ausschließlich im Bereich des Anfanges und im Bereich des Endes der Verstellung des Antriebsrades 21 von einer zur anderen Betriebslage an der weiteren Abwälzfläche 74 abwälzt, wobei in diesen beiden Bereichen der Gummiring 50 des Antriebsrades 21 auch von der ihm zugeordneten Abwälzfläche 73 abgehoben ist und daß weiters zwischen diesen beiden Bereichen während der übrigen Verstellung des Antriebsrades 21 von einer zur anderen Betriebslage der Gummiring 50 des Antriebsrades 21 sich an der ihm zugeordneten Abwälzfläche 73 abwälzt und dabei der erste Abschnitt 57 des Wellenstummels 56 von der weiteren Abwälzfläche 74 abgehoben ist. Mit Hilfe der beiden Abwälzflächen 73 und 74 wird bei Änderung der Drehrichtung des Antriebsrades 21 dasselbe automatisch von einer zur anderen Betriebslage verstellt. Wie erwähnt, greift an dem Abwälzkörper 51 die Stabfeder 69 an, die dabei über die an dem Abwälzkörper 51 vorgesehenen Abwälzflächen 73 und 74 das an dem Abwälzkörper verstellbar gehaltene Antriebsrad 21 umfangsseitig gegen das im Gerät stationär angeordnete Treibrad 20 drückt und auf diese Weise die umfangsseitige Antriebsverbindung zwischen dem Treibrad 20 und dem Antriebsrad 21 aufrechthält, so daß das Antriebsrad 21 bei seiner Verstellung von einer zur anderen Betriebslage entlang eines zur Achse des Treibrades 20 koaxialen Kreisbogens verstellt wird. In den beiden Betriebslagen des Antriebsrades 21 sorgt die Stabfeder 69 dafür, daß das Antriebsrad 21 sowohl mit dem Treibrad 20 als auch mit dem betreffenden Wickeldornrad 22 beziehungsweise 23 stets sicher in Antriebsverbindung bleibt, wofür die Stabfeder 69 einerseits eine bestimmte Federkraft aufzuweisen hat. Diese Federkraft soll aber andererseits nicht größer als in vorstehend erläutertem Zusammenhang erforderlich gewählt werden, weil sich diese Federkraft unmittelbar auf die durch das Abwälzen des ersten Abschnittes 57 des Wellenstummels 56 an der weiteren Abwälzfläche 74 in den beiden Betriebslagen des Antriebsrades 21 auftretenden Reibungsverluste auswirkt.

Im folgenden ist die Funktionsweise der Antriebseinrichtung 19 beschrieben, wobei davon ausgegangen ist, daß sich das Antriebsrad 21 in jener Betriebslage befindet, in der dasselbe umfangsseitig an dem Wickeldornrad 22 anliegt, wie dies in Fig.3 mit vollen Linien dargestellt ist. Bei in dieser Betriebslage befindlichem Antriebsrad 21 liegt der erste Abschnitt 57 des Wellenstummels 56 an der weiteren Abwälzflä che 74 an, wobei der Gummiring 50 des Antriebsrades 21 von der ihm zugeordneten Abwälzfläche 73 abgehoben ist und sich daher außer Verbindung von der Abwälzfläche 73 befindet. Wenn nun vom Motor 47 über das Treibrad 20 das Antriebsrad 21 gemäß Fig.3 entgegen dem Uhrzeigersinn angetrieben wird, dann wälzt sich zuerst der erste Abschnitt 57 des Wellenstummels 56 an der weiteren Abwälzfläche 74 ab, was eine Verstellung des Antriebsrades 21 in Richtung des Pfeiles 75 zur Folge hat, wobei diese Verstellung aufgrund des kleinen Durchmessers des ersten Abschnittes 57 des Wellenstummels 56 mit relativ geringer Verstellgeschwindigkeit erfolgt. Der Gummiring 50 des Antriebsrades 21 befindet sich dabei noch außer Verbindung von der Abwälzfläche 73. Nach einer Verstellung des Antriebsrades 21 in einem Winkelbereich von etwa 7° bezüglich der Achse des Treibrades 20 kommt dann der Gummiring 50 des Antriebsrades 21 mit der Abwälzfläche 73 in Verbindung, wobei von dem Antriebsrad 21 über die Abwälzfläche 73 der Abwälzkörper 51 entgegen der Kraft der Stabfeder 69 ein wenig entgegen der Richtung des Pfeiles 64 verschoben wird. Diese Verschiebung beträgt in der Praxis nur einige zehntel Millimeter. Durch diese Verschiebung des Abwälzkörpers 51 wird die weitere Abwälzfläche 74 von dem ersten Abschnitt 57 des Wellenstummels 56 abgehoben, so daß dann die Reibverbindung zwischen dem ersten Abschnitt 57 des Wellenstummels 56 mit der weiteren Abwälzfläche 74 gelöst ist. Nunmehr wälzt sich das Antriebsrad 21 mit dem Gummring 50 an der Abwälzfläche 73 ab. Diese Situation ist in Fig.3 mit einer strichpunktierten Linie angedeutet und in Fig.5 dargestellt, wobei das Antriebsrad 21 sich in einer Mittellage zwischen seinen beiden Betriebslagen befindet. Das Abwälzen des Gummiringes 50 an der Abwälzfläche 73 hat aufgrund des nunmehr wirksamen großen Durchmessers des Gummiringes eine schnelle Verstellbewegung des Antriebsrades 21 in Richtung des Pfeiles 75 zur Folge. Sobald der Gummiring 50 das Ende der Abwälzfläche 73 erreicht hat, hebt derselbe von der Abwälzfläche 73 ab und tritt daher außer Verbindung von der Abwälzfläche 73, wobei dann die Stabfeder 69 den Abwälzkörper 51 wieder in Richtung des Pfeiles 64 verschiebt, bis die weitere Abwälzfläche 74 mit dem ersten Abschnitt 57 des Wellenstummels 56 wieder in Verbindung tritt. Danach wälzt sich wieder der erste Abschnitt 57 des Wellenstummels 56 an der weiteren Abwälzfläche 74 ab, was wieder eine langsame Verstellung des Antriebsrades in Richtung des Pfeiles 75 zur Folge hat. Dadurch ist erreicht, daß sich das Antriebsrad 21 im Bereich des Endes seiner Verstel lung mit relativ geringer Geschwindigkeit dem Wickeldornrad 23 nähert, so daß ein Prellen beim Anlegen des Antriebsrades 21 mit seinem Gummiring 50 an das Wickeldornrad 23 verhindert ist. In der nunmehr erreichten Betriebslage des Antriebsrades 21, die in Fig.3 mit einer strichpunktierten Linie angedeutet ist und in der dasselbe vom Motor 47 her gemäß Fig.3 entgegen dem Uhrzeigersinn angetrieben wird, um das Wikkeldornrad 23 im Uhrzeigersinn anzutreiben, steht somit nur der erste Abschnitt 57 des Wellenstummels 56 mit der weiteren Abwälzfläche 74, nicht jedoch der Gummiring 50 des Antriebsrades 21 mit der Abwälzfläche 73 in Verbindung. Da der Durchmesser des Antriebsrades 21 relativ groß ist, ist ein großes Übersetzungsverhältnis zwischen dem Antriebsrad 21 und dem Wickeldornrad 23 erreicht, so daß mit einer relativ kleinen Drehzahl des Antriebsrades 21 das Auslangen gefunden wird, um das Wickeldornrad 23 mit ausreichend hoher Drehzahl anzutreiben. Da der Durchmesser des ersten Abschnittes 57 des Wellenstummels 56 und aufgrund der wie erwähnt relativ kleinen Drehzahl des Antriebsrades 21 auch die Umfangsgeschwindigkeit des ersten Abschnittes 57 des Wellenstummels 56 klein sind, treten in der Betriebslage des Antriebsrades 21 nur kleine Reibungsverluste auf, wodurch eine geringe Erwärmung und ein geringer Verschleiß des ersten Abschnittes 57 des Wellenstummels 56 und der weiteren Abwälzfläche 74 und eine relativ geringe Leistungsaufnahme des Motors 47 beim Antreiben des Wickeldornrades 23 mit dem Antriebsrad 21 erreicht ist. Da nur eine geringe Wärmeentwicklung auftritt, können die Reibpartner aus Kunststoff bestehen, wie dies bei vorliegendem Gerät vorteilhafterweise auch der Fall ist. Dadurch, daß der Durchmesser des ersten Abschnittes 57 des Wellenstummels 56 etwa ein Siebentel des Durchmessers des Antriebsrades 21 ist, ist eine hinsichtlich des Vermeidens von Prellvorgängen günstige geringe Verstellgeschwindigkeit des Antriebsrades im Bereich des Endes von dessen Verstellung erreicht, die aber andererseits noch ausreichend hoch ist im Hinblick auf die Erzielung einer insgesamt geringen Verstelldauer des Antriebsrades von einer zur anderen Betriebslage.

Die Erfindung ist nicht auf das vorstehend beschriebene Ausführungsbeispiel beschränkt. So kann das Antriebsrad auch als Zahnrad ausgebildet sein, um als Zahnräder ausgebildete Wickeldornräder anzutreiben. Anstelle den ersten Abschnitt des Wellenstummels zum Abwälzen an der weiteren Abwälzfläche auszunutzen, kann das Antriebsrad auch einen separaten koaxialen Ansatz zum Zusammenwirken mit einer weiteren Abwälzfläche aufweisen. Die weitere Abwälzfläche kann in ihrem mittleren Abschnitt, in dem sie nicht mit dem koaxialen Ansatz zusammenwirkt, praktisch jeden beliebigen Verlauf aufweisen. Auch kann die weitere Abwälzfläche aus zwei je im Bereich der Betriebslagen des Antriebsrades liegenden Teilflächen gebildet sein. Anstelle eines einstückig mit dem Wellenstummel verbundenen Endabschnittes kann auch ein auf einen zylindrischen Wellenstummel nach dem Hindurchführen von diesem durch den bogenförmigen Schlitz aufpreßbarer Sicherungsring zum verstellbaren Halten des Antriebsrades an dem Abwälzkörper vorgesehen sein, wobei dann der bogenförmige Schlitz keine Verbreiterung aufzuweisen braucht. Die Wickeldornräder müssen nicht wie beim beschriebenen Ausführungsbeispiel koaxial zu den Wickeldornen angeordnet und drehfest mit den Wickeldornen verbunden sein. Zwischen den Wickeldornen und den Wickeldornrädern können auch Rutschkupplungen vorgesehen sein. Auch können die Wickeldornräder gegenüber den Wickeldornen quer zu deren Achsrichtungen seitlich versetzt angeordnet sein und umfangsseitig mit zu den Wickeldornen koaxialen Zwischenrädern zusammenwirken.

## Ansprüche

1. Aufzeichnungs- und/oder Wiedergabegerät für einen bandförmigen Aufzeichnungsträger, der zwischen zwei nebeneinanderliegenden, rotierend antreibbaren Wickelkernen verläuft, mit zwei zum Antreiben der Wickelkerne vorgesehenen, in entgegengesetzten Drehrichtungen antreibbaren Wickeldornen und mit zwei je mit einem der beiden Wickeldorne in Antriebsverbindung stehenden, nebeneinanderliegenden Wickeldornrädern, die umfangsseitig von einem motorisch in entgegengesetzten Drehrichtungen antreibbaren Antriebsrad wahlweise antreibbar sind, das zum wahlweisen Antreiben der beiden Wickeldornräder zwischen zwei Betriebslagen verstellbar gehalten ist und das bei Änderung seiner Drehrichtung automatisch von einer zur anderen Betriebslage verstellt wird, wobei sich das Antriebsrad zu seiner Verstellung umfangsseitig an einer ihm zugeordneten, an einem Abwälzkörper vorgesehenen Abwälzfläche unter Federwirkung abwälzt, dadurch gekennzeichnet, daß das Antriebsrad einen von demselben abstehenden, zu demselben koaxialen zylindrischen Ansatz mit einem gegenüber dem Durchmesser des Antriebsrades kleineren Durchmesser aufweist und daß für den Ansatz an dem Abwälzkörper eine weitere Abwälzfläche vorgesehen ist, an der sich der Ansatz ausschließlich im Bereich des Anfanges und im Bereich des Endes der Verstellung des Antriebsrades von einer zur anderen Betriebslage abwälzt, wobei in diesen beiden Bereichen das Antriebsrad von der ihm zugeordneten Abwälzfläche abgehoben ist und wobei zwischen diesen beiden Bereichen der Ansatz von der weiteren Abwälzfläche abgehoben ist und sich das Antriebsrad an der ihm zugeordneten Abwälzfläche abwälzt.

2. Gerät nach Anspruch 1, dadurch gekennzeichnet, daß das Verhältnis des Durchmessers des Ansatzes zu dem Durchmesser des Antriebsrades in einem Bereich zwischen 1:5 und 1:10 liegt.

3. Gerät nach Anspruch 1 oder 2, dadurch gekennzeichnet, daß das Antriebsrad an dem Abwälzkörper verstellbar gehalten ist.

4. Gerät nach Anspruch 3, dadurch gekennzeichnet, daß der Abwälzkörper einen plattenförmigen Trägerteil aufweist, an dessen einer Plattenfläche das Antriebsrad mit einer Seitenfläche anliegt und in dem ein ihn durchsetzender bogenförmiger Schlitz vorgesehen ist, durch den ein von dem Antriebsrad abstehender, zu demselben koaxialer Wellenstummel hindurchragt, mit dem das Antriebsrad an dem Trägerteil verstellbar gehalten ist.

5. Gerät nach Anspruch 4, dadurch gekennzeichnet, daß der Wellenstummel an seinem vom Antriebsrad abgewandten freien Ende einen Endabschnitt aufweist, dessen Durchmesser größer als die Breite des bogenförmigen Schlitzes ist, und daß der bogenförmige Schlitz in seinem Mittelbereich eine Verbreiterung aufweist, durch die und den an sie angrenzenden Schlitzbereich der Endabschnitt des Wellenstummels beim Montieren des Antriebsrades an dem Abwälzkörper hindurchführbar ist.

6. Gerät nach Anspruch 4 oder 5, dadurch gekennzeichnet, daß der unmittelbar an das Antriebsrad angrenzende Abschnitt des Wellenstummels den Ansatz des Antriebsrades bildet und daß die weitere Abwälzfläche für den Ansatz durch eine Begrenzungswand des bogenförmigen Schlitzes in dem Trägerteil gebildet ist.

7. Gerät nach einem der Ansprüche 3 bis 6, dadurch gekennzeichnet, daß der Abwälzkörper im Gerät verstellbar gehalten ist und daß an dem Abwälzkörper eine Feder angreift, die über die an dem Abwälzkörper vorgesehenen Abwälzflächen das an dem Abwälzkörper verstellbar gehaltene Antriebsrad umfangsseitig gegen ein im Gerät stationär angeordnetes Treibrad drückt.

8. Gerät nach Anspruch 7, dadurch gekennzeichnet, daß die Feder als Stabfeder ausgebildet ist, die mit ihrem Mittelabschnitt an dem verstellbar gehaltenen Abwälzkörper angreift und mit ihren beiden Endabschnitten je an einem stationären Stift abgestützt ist.

Fig.1

Fig.2

Fig.3

Fig.5

Fig.4